# NOUVEAU FASCICULE DE BREVET EUROPEEN

(11) **EP 1 109 689 B2**
(45) Date de publication et mention de la décision concernant l'opposition: **30.12.2009**
(45) Mention de la délivrance du brevet: 26.02.2003
(21) Numéro de dépôt: 00949671.2
(22) Date de dépôt: 07.07.2000
(51) Int. Cl.: B60H 1/00

(54) **INSTALLATION DE CHAUFFAGE ET NOTAMMENT DE CHAUFFAGE-CLIMATISATION DU TYPE PRESENTANT UN VOLET DE MIXAGE**
HEIZUNGS- UND KLIMAANLAGE MIT EINER LUFTMISCHKLAPPE
HEATING SYSTEM, ESPECIALLY A HEATING AND AIR-CONDITIONING SYSTEM WITH A MIXING FLAP

(30) Priorité: 12.07.1999 FR 9908997
(43) Date de publication de la demande: 27.06.2001
(60) Demande divisionnaire: 02024059.4
(73) Titulaire: VALEO SYSTEMES THERMIQUES, 78321 Le Mesnil St Denis Cedex (FR)
(72) Inventeur: VINCENT, Philippe, F-28230 Epernon (FR)
(86) Numéro de dépôt international: PCT/FR2000/001964
(87) Numéro de publication internationale: WO 2001/008911

(56) Documents cités:
- EP-B1- 0 266 230
- DE-A- 19 631 371
- FR-A- 2 562 845
- FR-A1- 2 773 112
- RU-U1- 5 145
- SU-A1- 1 452 716
- US-A- 5 135 046

## Description

La présente invention a pour objet une installation de chauffage et notamment de chauffage-climatisation comprenant notamment une entrée d'air, éventuellement pourvue d'un évaporateur traversé par de l'air provenant de l'entrée d'air, et un élément formant radiateur, ainsi qu'un volet de mixage déplaçable entre une première et une deuxième positions extrêmes, la première position correspondant à un passage direct de l'air provenant de l'entrée d'air, après traversée éventuelle dudit évaporateur, vers un circuit de distribution d'air pour former un flux d'air direct, la deuxième position correspondant à un passage dérivé de l'air provenant de l'entrée d'air à travers une ouverture qui alimente l'élément formant radiateur, avant d'atteindre le circuit de distribution d'air à travers un canal de dérivation situé en aval de l'élément formant radiateur pour constituer un flux d'air dérivé, des positions intermédiaires entre la première et la deuxième position permettant un mixage entre ledit flux d'air direct et ledit flux d'air dérivé.

Lorsque l'installation est une simple installation de chauffage, l'air provenant de l'entrée d'air alimente le flux d'air direct et/ou le flux d'air dérivé, ce qui permet de réaliser le mixage désiré. Lorsque l'installation est une installation de chauffage-climatisation, le flux d'air direct, aussi bien que le flux d'air dérivé, sont en général alimentés à partir d'air provenant de l'entrée d'air et qui sort de l'évaporateur.

Dans les installations de chauffage ou de chauffage-climatisation connues, le volet de mixage est du type papillon et il est articulé autour d'un axe porté par une extrémité d'une cloison séparatrice située entre l'élément formant radiateur et le canal de distribution.

Dans une première position du volet, une première partie du volet obture la dérivation de l'air vers l'élément formant radiateur, alors qu'une deuxième partie du volet obture la sortie du canal de distribution. Dans une deuxième position du volet, la première portion du volet obture le passage direct de l'air pour que le flux d'air provenant de l'entrée d'air (et éventuellement issu de l'évaporateur) soit dérivé entièrement vers l'élément formant radiateur alors que la deuxième partie du volet dégage entièrement la sortie du canal de distribution. Dans les positions intermédiaires entre ces deux positions, l'ouverture du volet permet de réaliser le mixage recherché entre le flux d'air direct et le flux d'air dérivé à travers l'élément formant radiateur.

Un inconvénient de ce type de dispositif est en particulier que la section du canal d'air disponible pour le flux d'air direct est relativement limitée, car elle est déterminée par les dimensions de la première partie du volet de mixage. Une autre installation de chauffage est connue du document RU 5145 qui divulgue une installation de chauffage selon le préambule de la revendication 1.

La présente invention a pour objet une installation de chauffage et notamment de chauffage-climatisation présentant un mixage sur l'air, et pour laquelle la section de passage du flux d'air direct ne présente plus la limitation précitée.

L'installation est ainsi caractérisée en ce que le volet de mixage présente un axe de rotation disposé au voisinage d'une paroi du canal de dérivation aval qui est opposé à l'entrée d'air.

Au moins une desdites première et deuxième régions peut être plane. En particulier, la première région peut être plane et la deuxième région peut présenter un profil curviligne qui tourne sa concavité vers ledit canal de dérivation, le profil de la deuxième région étant par exemple, au moins en partie un arc de cercle.

Il est particulièrement avantageux que la deuxième région soit profilée de manière à autoriser un passage d'air de l'entrée d'air vers le canal de distribution dans au moins certaines positions intermédiaires entre la première et la deuxième position du volet de mixage.

En particulier, la deuxième région peut présenter à ses extrémités des régions formant butée d'étanchéité entre lesquelles est disposée une région rentrante en direction du canal de dérivation, pour autoriser ledit passage d'air vers le canal de distribution.

Selon une autre variante (profilée en S), la première région peut présenter un profil curviligne tournant sa concavité vers ladite entrée d'air (lorsque le volet de mixage est dans sa deuxième position) et la deuxième région peut présenter un profil curviligne tournant sa concavité vers ledit canal de dérivation (lorsque le volet de mixage est dans sa deuxième position), pour autoriser ledit passage d'air vers le canal de distribution.

Cette admission contrôlée de l'air dans le canal de dérivation permet, en créant de manière contrôlée un mélange partiel en amont du canal de distribution, d'améliorer le mélange entre le flux d'air direct et le flux d'air dérivé, et d'éviter au moins partiellement les phénomènes rencontrés avec les dispositifs de l'art antérieur, notamment la stratification.

Le dispositif selon l'invention peut également présenter un moyen pour orienter le flux d'air dérivé de manière à faciliter son mélange avec le flux d'air direct dans au moins une position intermédiaire du volet de mixage.

Ce moyen d'orientation peut être par exemple un déflecteur solidaire du volet s'étendant à partir de son axe de rotation.

Ce peut être également un deuxième volet dont l'axe de rotation est le même que celui du volet de mixage ou bien est décalé par rapport à celui du volet de mixage.

Le deuxième volet peut être du type drapeau. Ce volet du type drapeau peut présenter des positions extrêmes telles que l'extrémité du deuxième volet qui est opposée à son axe de rotation constitue, lorsque ledit volet est dans la première position, un bord de fuite ou bien selon une autre variante, un bord d'attaque pour la flux d'air dérivé qui le traverse.

Le deuxième volet peut être du type papillon ou bien encore du type tambour. Dans ce dernier cas, l'axe du deuxième volet du type tambour peut être disposé soit en amont de l'axe du volet de mixage dans le sens de propagation du flux d'air dérivé, soit en aval de celui-ci.

D'autres caractéristiques de l'invention apparaîtront à la lecture de la description qui va suivre, en liaison avec les dessins dans lesquels :
- la figure 1 représente une installation selon l'art antérieur,
- les figures 2 à 4 représentent respectivement un premier, un deuxième et un troisième mode de réalisation de l'invention,
- les figures 5a, 5b et 5c illustrent un quatrième mode de réalisation de l'invention, et
- les figures 6 à 10 représentent cinq modes de réalisation d'un dispositif selon l'invention pourvus de deux volets, à savoir un volet de mixage et un volet d'orientation pour faciliter le mélange entre le flux d'air direct et le flux d'air dérivé.

La description ci-après est relative à une installation de chauffage-climatisation qui présente une boucle frigorigène et donc un évaporateur, traversé par l'air provenant de l'entrée d'air. On notera que l'invention s'applique également à une installation de chauffage, dépourvue de boucle frigorigène, et donc d'évaporateur, et qui présente un mixage entre de l'air provenant de l'entrée d'air (flux direct) et un flux dérivé qui traverse un élément formant radiateur.

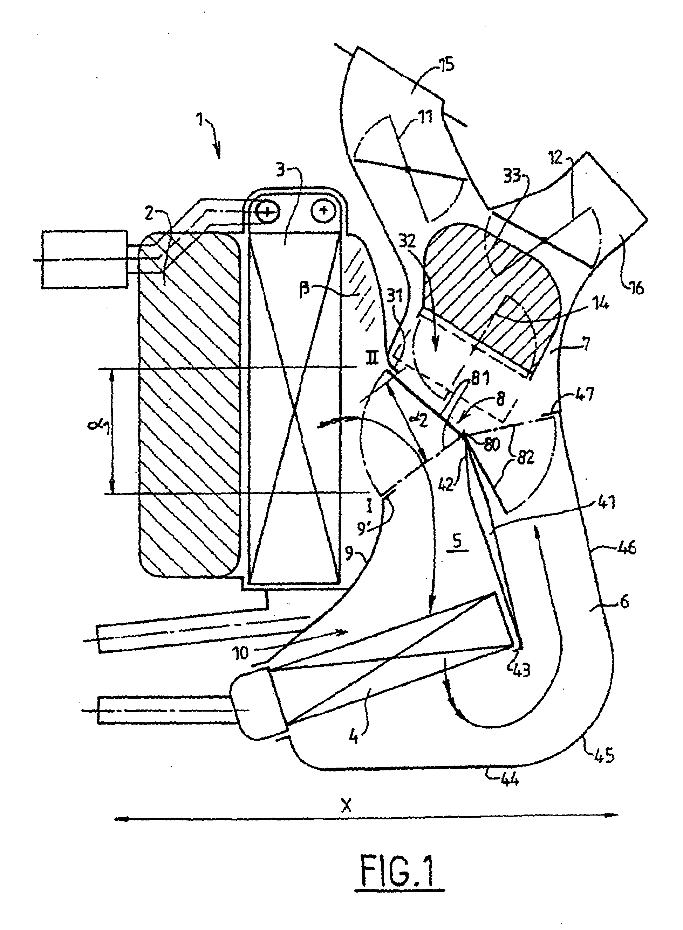

Le dispositif représenté à la figure 1, et désigné par le repère général 1, comporte une entrée d'air 2, axiale ou latérale, à partir de laquelle de l'air traverse un évaporateur 3 pour générer de l'air frais qui est ensuite envoyé dans l'habitacle du véhicule. Dans l'installation représentée, l'air qui sort de l'évaporateur 3 peut être dirigé directement sous forme d'un flux direct vers un circuit de distribution d'air qui peut comporter par exemple un conduit de dégivrage 15 et un conduit d'aération 16, dont l'alimentation est commandée par des vannes papillon respectivement 11 et 12. Une autre vanne papillon 14 peut être mise en oeuvre pour diriger l'air vers une sortie 33 en vue du chauffage des pieds des passagers du véhicule.

Pour des températures extérieures intermédiaires, pour lesquelles l'air froid sortant de l'évaporateur aurait une température trop froide s'il était envoyé tel quel dans l'habitacle, il est prévu d'utiliser un circuit de dérivation pour produire un flux d'air dérivé à travers un élément 4 formant radiateur de manière à obtenir un réchauffage d'une partie de l'air froid issu de l'évaporateur. A cet effet, les installations de l'art antérieur mettent en oeuvre un volet dit de mixage d'air 8 qui est articulé autour d'un axe 80 situé à une extrémité 42 d'une cloison séparatrice 41 du circuit de dérivation. Cette vanne papillon présente deux portions ou volets 81 et 82 et elle est déplaçable entre deux positions extrêmes I et II.

Dans la position I (en pointillés à la figure 1), la portion 81 du volet 8 ferme le circuit de dérivation et la portion 82 obture la sortie du canal 6 de dérivation situé en aval de l'élément 4 formant radiateur.

Dans la position II (illustrée en traits pleins à la figure 1), la portion 81 du volet 8 obture le passage du flux d'air issu de l'évaporateu 3 vers le circuit (15, 16, 33) de distribution d'air, alors que le volet 82 dégage la sortie du canal de dérivation 6.

Dans la position I, la portion 81 du volet 8 vient en butée en 9', et la portion 82 en 47. Dans la position II, l'extrémité de la portion 81 vient en butée en 31.

Les régions de butée 9' et 31 sont portées par une paroi 9, de contour par exemple curviligne, qui forme un rétrécissement du passage d'air en sortie de l'évaporateur 3. Elles sont séparées par une distance α1 qui est relativement réduite en raison de la géométrie du dispositif et du débattement possible du volet de type papillon. En outre, la distance α2 entre l'axe 80 du volet et la région de butée 31 est limitée par la taille de la portion 81 du volet 80, laquelle est nécessairement réduite en raison de la position médiane de cet axe.

Dans la position II, l'air froid issu de l'évaporateur est dirigé dans un canal de dérivation 10 qui présente une région de canal 5 située en amont du radiateur 4, et après dérivation dans les bords 44 et 45 le flux d'air dérivé revient approximativement à 180° dans le canal de dérivation aval 6 et la portion de volet. 82. De manière classique, le réglage de la position du volet 80 entre les positions I et II permet de faire varier la proportion entre le flux d'air qui passe directement de l'évaporateur 3 au circuit de distribution et le flux d'air dérivé et réchauffé par le radiateur 4. Le mélange entre le flux d'air direct et le flux d'air dérivé s'effectue dans une chambre de mixage 32 située au niveau du circuit de distribution, en amont des sorties (15, 16, 33).

Un premier problème que pose cette installation est la limitation de la valeur de α1 et de α2. Un autre problème de ce dispositif de l'art antérieur est un mélange inhomogène dans la chambre de mixage 32 du circuit de distribution qui est située immédiatement en aval du volet 80, ce qui se traduit en particulier par une stratification de l'air qui reste composé de couches chaudes et froides au lieu de se répartir sous la forme d'un flux d'air de température homogène.

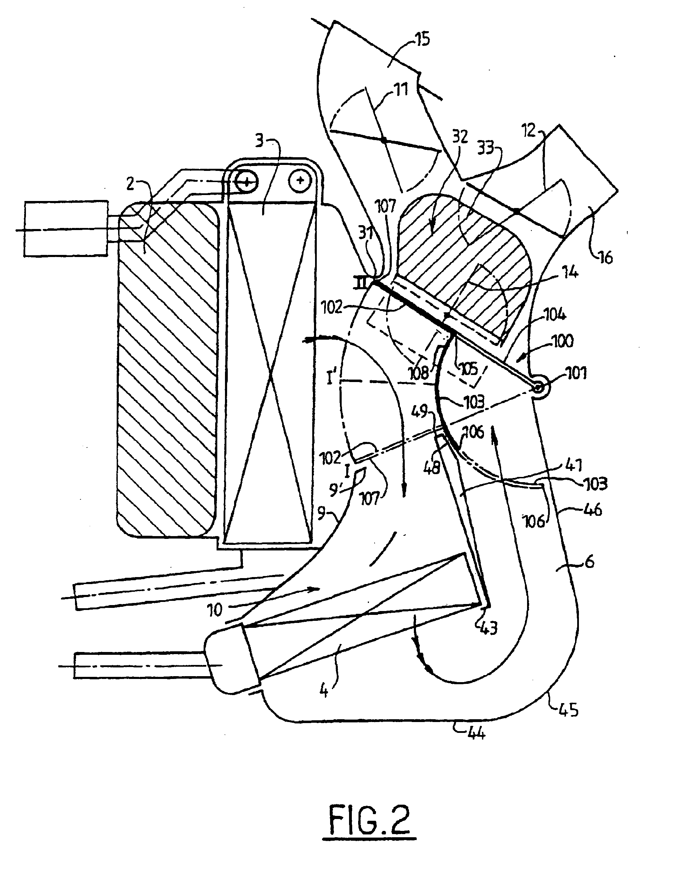

Comme le montre la figure 2, une première variante d'un dispositif selon l'invention présente un volet 100 dont l'axe de rotation 101 est situé au voisinage de la paroi 46 du canal de dérivation 6 opposée à l'évaporateu 3. Ce volet 100 présente, dans le mode de réalisation proposé, une première région 102 qui est plane et qui est coplanaire avec l'axe de rotation 101, et une deuxième région 103 formant un arc de cercle adjacent à la région 102 et qui, à son point de départ 105 présente une tangente perpendiculaire au plan de la région plane 102. Les régions 102 et 103 sont reliées à l'axe 101 par une tige ou une région plate 104.

Dans la position I représentée en pointillés, et correspondant à un flux d'air direct, l'extrémité 107 de la région 102 vient en butée en 9'. La région 102 vient également en butée à l'extrémité 49 de la cloison séparatrice 41 au voisinage immédiat du point 105 de départ de la deuxième région 103. Dans la position II représentée en traits pleins, l'extrémité 107 de la région 102 vient en butée en 31 et l'extrémité 108 de la région en arc de cercle 103 longe étroitement une région incurvée 48 située à proximité de l'extrémité 49 de la cloison séparatrice 41.

Comme on le voit à la figure 2, la position I, représentée en pointillés, dégage un espace important pour le passage du flux direct sortant de l'évaporateur 3 puisque la côte α1 dépend des battements angulaires du volet 100 qui est améliorée d'une part par le fait que l'axe 101 n'est plus médian mais situé au voisinage de la paroi 46, et d'autre part par le fait que la disposition du volet 103 est plus favorable à des débattements angulaires importants. En outre, la disposition du volet 100 dégage entièrement la côte α2 dans la position I. Cette augmentation importante des côtes α1 et α2 permet d'atténuer d'une manière importante les pertes de charge pour le flux d'air direct, et d'augmenter le volume effectif de la chambre de mixage 32.

Dans des positions intermédiaires, par exemple la position I', l'extrémité 106 du volet 103 se déplace progressivement pour venir plus ou moins obturer le canal de distribution 106 et influer donc sur la quantité d'air dérivé qui est mélangée avec le flux d'air direct. Ce mélange est plus ou moins modulé également par la position du volet 102 qui vient plus ou moins s'interposer et diviser le flux d'air sortant de l'évaporateur 3.

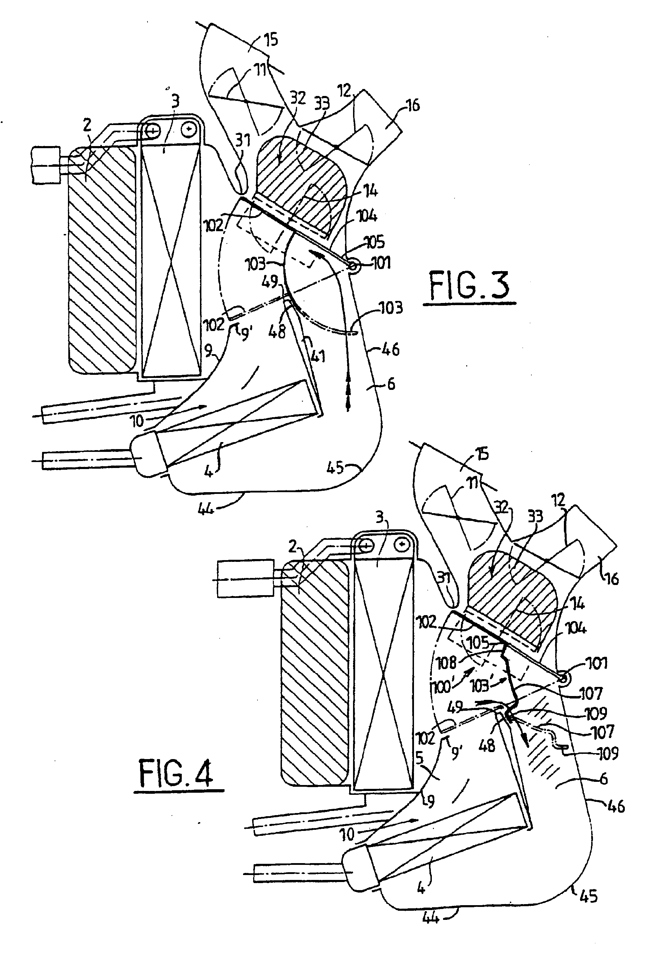

Le mode de réalisation de la figure 3 se distingue par le fait que la tige 104 présente à sa naissance une région 105 formant un petit volet qui vient dériver le flux sortant du canal 6 en direction du flux direct issu de l'évaporateur 3, de manière à faciliter le mélange entre ces deux flux dans la chambre de mixage 32 et à éviter au moins partiellement le phénomène de stratification évoqué ci-dessus.

Dans le mode de réalisation de la figure 4, d'ailleurs éventuellement combinable avec le mode de réalisation de la figure 3, le volet 100' présente une deuxième région 103' profilée de manière à présenter une région de butée 108 pour la position I, une région de butée 109 pour la position II, alors que, la région 107 située entre ces deux butées est en retrait en direction de la paroi 46, c'est-à-dire à l'opposé du flux d'air issu de l'évaporateur 3 de sorte que, dans les positions intermédiaires du volet 100', une partie de l'air sortant de l'évaporateur 3 passe entre la région 107 et la région de butée incurvée 48 et s'introduit directement dans le canal de dérivation aval 6 où il se mélange avec le flux d'air dérivé sortant du radiateur 4.

Du fait que le passage entre la région 107 et la région de butée incurvée 48 est relativement étroit, ceci induit une perte de charge contrôlée pour le flux d'air direct ce qui est favorable au mélange. En effet, le flux d'air dérivé subit également une perte de charge due à son passage par le canal de dérivation amont 5, le radiateur 4 et son changement de direction par le profil 45 et la perte de charge contrôlée du flux d'air direct permet d'en abaisser la pression pour la rendre proche de celle du flux d'air dérivé.

Dans ce mode de réalisation, il y a donc trois passages d'air, un passage direct entre le volet 102 et la butée 31, un passage dérivé vers les canaux de dérivation amont 5 et aval 6, et un passage dérivé entre les régions 48 et 107 et. Il y a également deux zones de mélange entre le flux direct et le flux dérivé, d'où une augmentation du volume dans lequel se produit le mélange entre les flux d'air direct et dérivé, ce qui contribue également à la diminution des phénomènes parasites, notamment de stratification.

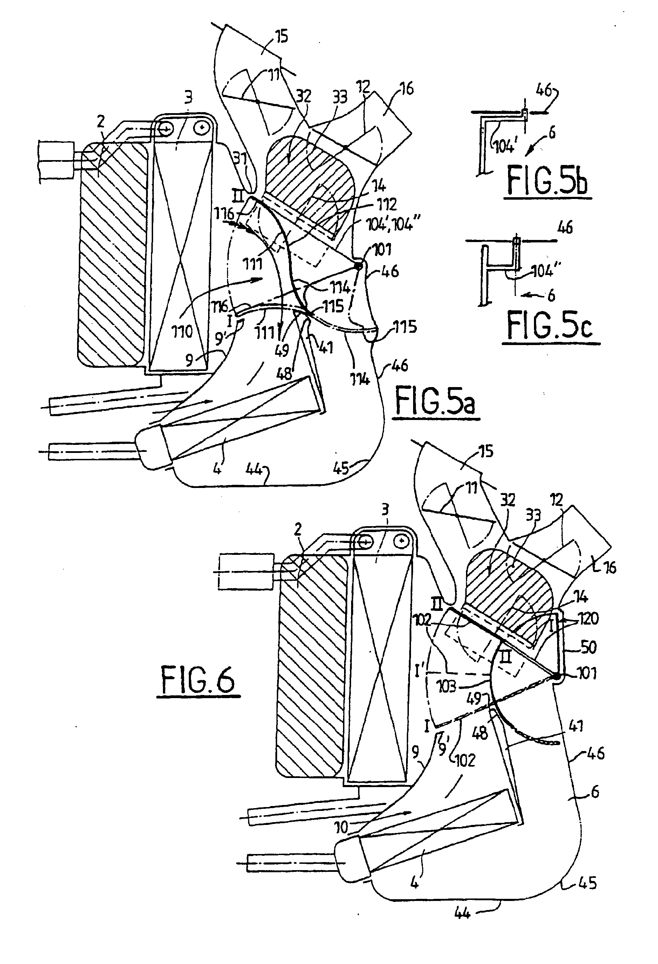

Le mode de réalisation représenté aux figures 5a à 5c est une variante du précédent. Il s'en distingue par la forme du volet 110, qui est un S inversé (sur le dessin) présentant une première région 111 dont la concavité est tournée vers l'évaporate 3, un point d'inflexion 112, et une deuxième région 114 dont la concavité est tournée vers l'axe de rotation 101 situé au voisinage de la paroi 46. L'extrémité 116 sert de butée en 9' de la position I et en 31 pour la position II. L'extrémité 115 sert de butée en 48 pour la position II (représentée en traits pleins). Pour les positions intermédiaires, le profil en S dégage progressivement et de plus en plus l'espace entre le volet et la région 48 au fur et à mesure que le volet 110 tourne dans le sens contraire des aiguilles d'une montre (tel que représenté).

Le volet 110 présentant une première région 11 et une deuxième région 114 est raccordé à l'axe 101 par une région plane 104' (figure 5b) qui peut être décalée vers l'intérieur du canal 6 comme représenté à la figure 5c (repère 104'').

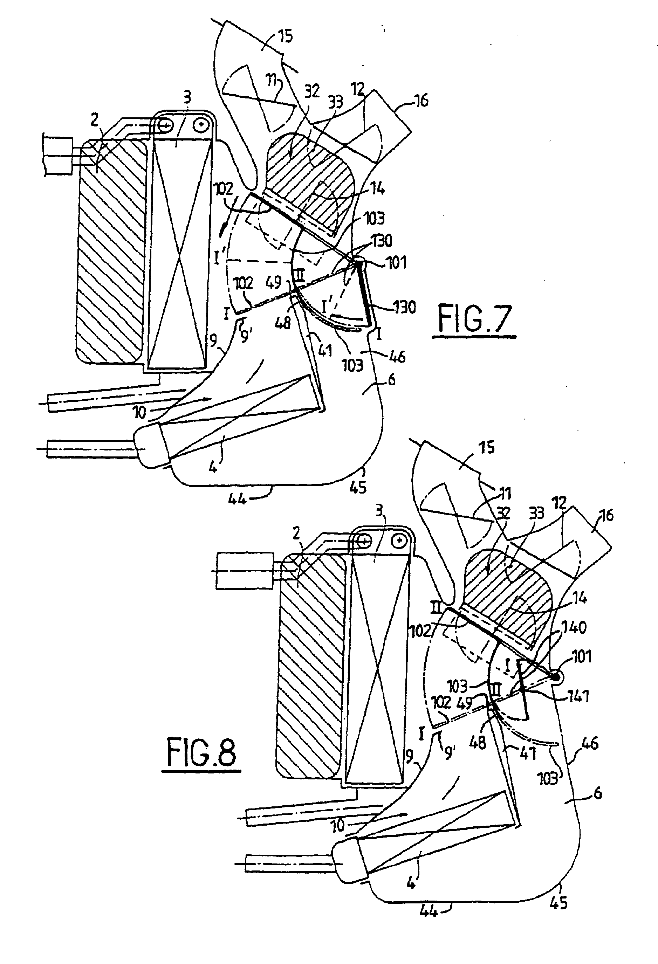

Dans le mode de réalisation de la figure 6, le volet 100 est sensiblement représenté comme aux figures 2 et 3, et la fonction de redirection de l'air sortant du canal de distribution 6 est réalisée non pas dans une région telle que 105 du volet 100, mais par un deuxième volet 120, du type drapeau, mobile entre deux positions I où le volet 120 longe une région 50 de la paroi 46 située en aval de l'axe 101 et une position II, dans laquelle, il vient par exemple en alignement avec la région 102 du volet 100. On peut ainsi régler la position de ce deuxième volet 120 pour obtenir la meilleure efficacité de mélange du flux direct et du flux dérivé. Sur la figure 7, le volet 130 est du type drapeau articulé autour de l'axe 101 mais dans la position I, il vient longer une région 130 de la paroi 46 située en amont de l'axe 101.

A la figure 8, l'orientation de l'air issu du canal de dérivation 6 est assurée par un volet 140 de type papillon dont l'axe 141 est situé dans une région médiane du canal 6, par exemple, comme représenté, dans le plan de la région 102 du volet 100 en sa position I. Dans la position I du deuxième volet 140, celui-ci est sensiblement parallèle à l'axe du canal 6 alors qu'il vient obturer celui-ci dans sa position II.

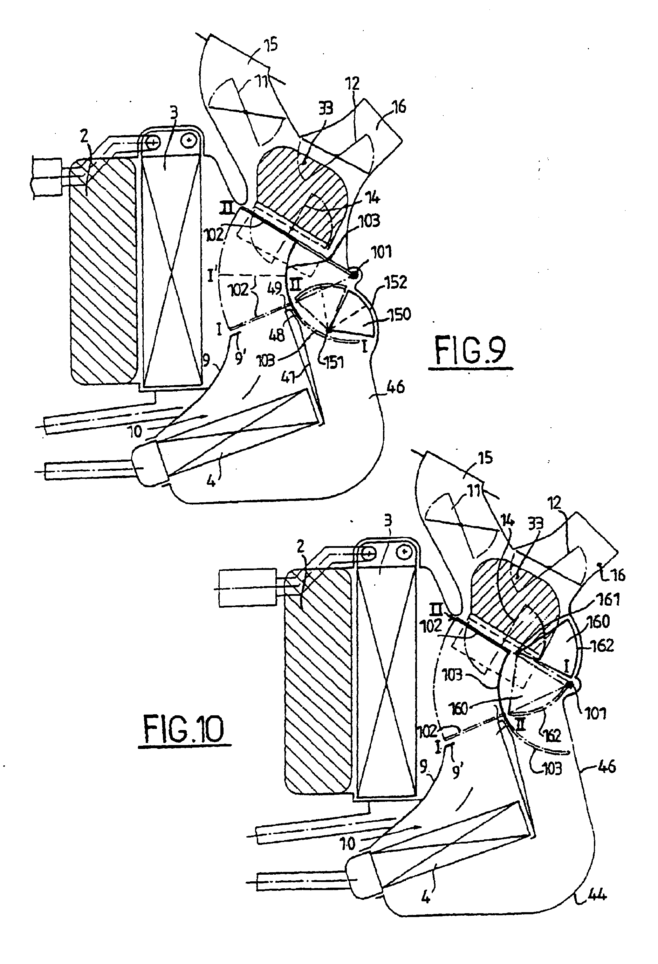

Aux figures 9 et 10, le deuxième volet est du type tambour. A la figure 9, son axe 151 est situé en amont de l'axe 101, et, dans sa position I, le volet 150 est logé dans une région concave 152 de la paroi 46 située en amont de l'axe 101. Dans la position II, le volet 150 obture la sortie du canal 6. A la figure 10, l'axe 161 du volet 160 de type tambour est situé en aval de l'axe 101 et dans sa position I, il est logé dans une région concave 162 de la paroi 46 située en aval de l'axe 101. Dans la position II, le volet 162 obture la sortie du canal 6.

Un avantage du deuxième volet, décrit en relation avec les figures 6 à 10 est qu'en mode « froid » (passage du seul flux direct), il peut être en position fermée, ce qui permet d'obturer le creux 103 du volet de mixage, qui est susceptible de générer des vortex.

A titre de variante, l'axe 101 du volet de mixage (figures 2 à 10) pourrait être écarté sensiblement de la paroi 46, de manière notamment à laisser passer, entre cet axe 101 et la paroi 46, une partie du flux dérivé, vers la chambre de mixage 32.

L'installation selon l'invention peut être intégrée à un poste de conduite d'un véhicule automobile.

## Revendications

1. Installation de chauffage, notamment de chauffage-climatisation comportant notamment une entrée d'air (2), un élément formant radiateur (4) et un volet de mixage (100, 100', 110) déplaçable entre une première (I) et une deuxième (II) position extrême, la première position correspondant à un passage direct de l'air de l'entrée d'air (2) vers un circuit de distribution d'air pour former un flux d'air, direct et la deuxième position correspondant à un passage dérivé de l'air de l'entrée d'air à travers une ouverture qui alimente l'élément formant radiateur (4) avant d'atteindre le circuit de distribution d'air à travers un canal de dérivation aval (6) situé en aval de l'élément formant radiateur (4) pour constituer un flux d'air dérivé, ledit passage dérivé de l'air comprenant :
- ladite ouverture,
- l'élément formant radiateur (4),
- un canal de dérivation amont (5) situé en amont de l'élément formant radiateur (4) et délimité par une paroi (9) et une cloison séparatrice (41),
- le canal de dérivation aval (6) délimité par ladite cloisons séparatrice (41) et par une paroi (46) qui est opposée à l'entrée d'air (2) ;
des positions intermédiaires entre la première et la deuxième position permettant un mixage entre ledit flux d'air direct et ledit flux d'air dérivé, le volet de mixage. (100, 100', 110) présente d'une part une première (102, 111) et une deuxième (103, 103', 114) régions adjacentes immobiles l'une par rapport à l'autre et d'autre part un axe de rotation (101) distant desdites première et deuxième régions adjacentes, et en ce que dans la première position (I), la première région (102, 111) obture ladite ouverture d'alimentation de l'élément formant radiateur (4), et la deuxième région (103, 103', 112) obture au moins partiellement ledit canal de dérivation aval (6), et en ce que, dans la deuxième position (II), la première (102, 111) et la deuxième (103, 103', 114) région coopèrent pour obturer une ouverture de passage direct vers le circuit de distribution d'air (15, 16, 33), **caractérisé en ce que** l'axe de rotation (101) du volet de mixage est disposé au voisinage de la paroi (46) du canal de dérivation aval.

2. Installation selon la revendication 1, **caractérisée en ce qu'**au moins une desdites première (102) et deuxième (103) régions est plane.

3. Installation selon la revendication 2, **caractérisée en ce que** la première région (102) est plane et **en ce que** la deuxième (103) région présente un profil curviligne qui tourne sa concavité vers ledit canal de dérivation (6).

4. Installation selon la revendication 3, **caractérisée en ce que** le profil de la deuxième région (103) est au moins en partie un arc de cercle.

5. Installation selon une des revendications précédentes, **caractérisée en ce que** la deuxième région (103', 114) est profilée de manière à autoriser un passage d'air de l'entrée d'air vers le canal de distribution (6) dans au moins certaines positions intermédiaires entre la première (I) et la deuxième (II) position.

6. Installation selon la revendication 5, **caractérisée en ce que** la deuxième région présente à ses extrémités des régions (108, 109) formant butée d'étanchéité entre lesquelles est disposée une région (107) rentrante en direction dudit canal de dérivation (6), pour autoriser ledit passage d'air vers le canal de distribution.

7. Installation selon la revendication 5, **caractérisée en ce que** le volet de mixage (110) présente une première région (111) ayant un profil curviligne tournant sa concavité vers ladite entrée d'air (2) lorsque le volet de mixage (110) est dans sa deuxième position (II) et une deuxième région (114) ayant un profil curviligne tournant sa concavité vers ledit canal de dérivation (6) lorsque le volet de mixage (110) est dans sa deuxième position (II).

8. Installation selon une des revendications précédentes, **caractérisée en ce qu'**elle présente un évaporateur (3) traversé par de l'air provenant de l'entrée d'air.

9. Installation selon une des revendications précédentes, **caractérisée en ce qu'**elle présente un moyen (105, 120, 130, 140, 150, 160) pour orienter le flux d'air dérivé de manière à faciliter son mélange avec le flux d'air direct dans au moins une position intermédiaire du volet de mixage (100, 100', 110).

10. Installation selon la revendication 9, **caractérisée en ce que** ledit moyen d'orientation est un déflecteur (105) solidaire du volet de mixage (100, 100', 110) et s'étendant à partir de son axe de rotation (101).

11. Installation selon la revendication 9, **caractérisée en ce que** ledit moyen d'orientation est un deuxième volet (120, 130) dont l'axe de rotation est le même que celui (101) du volet de mixage (100, 100', 110).

12. Installation selon la revendication 9, **caractérisée en ce que** ledit moyen d'orientation est un deuxième volet (140, 150, 160) dont l'axe de rotation est décalé par rapport à celui (101) du volet de mixage (100, 100', 110).

13. Installation selon une des revendications 11 ou 12, **caractérisée en ce que** le deuxième volet (120, 130) est du type drapeau.

14. Installation selon la revendication 13, **caractérisée en ce que** dans la première position (I) du deuxième volet (120), son extrémité qui est opposée à son axe de rotation constitue un bord de fuite.

15. Installation selon la revendication 13, **caractérisée en ce que** dans la première position du deuxième volet (130), son extrémité opposée à son axe de rotation constitue un bord d'attaque.

16. Installation selon la revendication 12, **caractérisée en ce que** le deuxième volet (140) est du type papillon.

17. Installation selon la revendication 12, **caractérisée en ce que** le deuxième volet (150, 160) est du type tambour.

18. Installation selon la revendication 17, **caractérisée en ce que** l'axe (151) du deuxième volet (150) est disposé en amont de l'axe (101) du volet de mixage (100, 100', 110), dans le sens de propagation du flux d'air dérivé.

19. Installation selon la revendication 17, **caractérisée en ce que** l'axe (161) du deuxième volet (160) est disposé en aval de l'axe (101) du volet de mixage (100, 100', 110), dans le sens de propagation du flux d'air dérivé.

20. Installation selon une des revendications précédentes, **caractérisée en ce que** l'axe de rotation (101) du volet de mixage (100, 100', 110) est espacé de ladite paroi (46) du canal de dérivation (6) de manière à laisser passer une partie du flux d'air dérivé, entre ledit axe de rotation (101) et ladite paroi (46).

## Claims

1. Heating installation, in particular a heating and air conditioning installation comprising in particular an air inlet (2), an element forming a radiator (4) and a mixing flap (100, 100', 110) movable between a first (I) and a second (II) extreme position, the first position corresponding to a direct passage of the air from the air inlet (2) to an air distribution circuit in order to form a direct air flow and the second position corresponding to a diverted passage of the air from the air inlet through an opening which supplies the element forming a radiator (4) before reaching the air distribution circuit through a downstream diversion channel (6) situated downstream of the element forming a radiator (4) in order to constitute a diverted air flow, said diverted air passage comprising:
- said opening,
- the element forming a radiator (4),
- an upstream diversion channel (5) situated upstream of the element forming a radiator (4) and delimited by a wall (9) and a separating partition (41),
- the downstream diversion channel (6) delimited by said separating partition (41) and by a wall (46) which is opposite the air inlet (2);
intermediate positions between the first and second positions allowing mixing between the said direct air flow and said diverted air flow, the mixing flap (100, 100', 110) has first(102, 111) and second (103, 103', 114) adjacent regions immobile with respect to each other and has an axis of rotation (101) at a distance from said first and second adjacent regions, and in that, in the first position (I), the first region (102, 111) closes off said supply opening of the element forming a radiator (4), and the second region (103, 103', 112) at least partially closes off said downstream diversion channel (6), and in that, in the second position (II), the first (102, 111) and second (103, 103', 114) regions cooperate in order to close off a direct passage opening to the air distribution circuit (15, 16, 33), **characterised in that** the axis of rotation (101) of the mixing flap is arranged in the vicinity of the wall (46) of the downstream diversion channel.

2. Installation according to Claim 1, **characterised in that** at least one of the said first (102) and second (103) regions is flat.

3. Installation according to Claim 2, **characterised in that** the first region (102) is flat and **in that** the second region (103) has a curvilinear profile which turns its concavity towards the said diversion channel (6).

4. Installation according to Claim 3, **characterised in that** the profile of the second region (103) is at least partly an arc of a circle.

5. Installation according to one of the preceding claims, **characterised in that** the second region (103', 114) is profiled so as to allow a passage of air from the air inlet to the distribution channel (6) in at least some intermediate positions between the first (I) and second (II) positions.

6. Installation according to Claim 5, **characterised in that** the second region has at its ends regions (108, 109) forming a sealing stop between which there is disposed a region (107) re-entrant in the direction of the said diversion channel (6) to allow the said passage of air to the distribution channel.

7. Installation according to Claim 5, **characterised in that** the mixing flap (110) has a first region (111) having a curvilinear profile turning its concavity towards the said air inlet (2) when the mixing flap (110) is in its second position (II) and a second region (114) having a curvilinear profile turning its concavity towards the said diversion channel (6) when the mixing flap (110) is in its second position (II).

8. Installation according to one of the preceding claims, **characterised in that** it has an evaporator (3) through which the air coming from the air inlet passes.

9. Installation according to one of the preceding claims, **characterised in that** it has a means (105, 120, 130, 140, 150, 160) for orienting the flow of diverted air so as to facilitate its mixing with the direct air flow in at least one intermediate position of the mixing flap (100, 100', 110).

10. Installation according to Claim 9, **characterised in that** the said orientation means is a deflector (105) fixed to the mixing flap (100, 100', 110) and extending from its axis of rotation (101).

11. Installation according to Claim 9, **characterised in that** the said orientation means is a second flap (120, 130) whose axis of rotation is the same as that (101) of the mixing flap (100, 100', 110).

12. Installation according to Claim 9, **characterised in that** the said orientation means is a second flap (140, 150, 160) whose axis of rotation is offset with respect to that (101) of the mixing flap (100, 100', 110).

13. Installation according to one of Claims 11 or 12, **characterised in that** the second flap (120,130) is of the flag type.

14. Installation according to Claim 13, **characterised in that**, in the first position (I) of the second flap (120), its end which is opposite to its axis of rotation constitutes a trailing edge.

15. Installation according to Claim 13, **characterised in that**, in the first position of the second flap (130), its end opposite to its axis of rotation constitutes a leading edge.

16. Installation according to Claim 12, **characterised in that** the second flap (140) is of the butterfly type.

17. Installation according to Claim 12, **characterised in that** the second flap (150, 160) is of the drum type.

18. Installation according to Claim 17, **characterised in that** the axis (151) of the second flap (150) is disposed upstream of the axis (101) of the mixing flap (100, 100', 110), in the direction of propagation of the diverted air flow.

19. Installation according to Claim 17, **characterised in that** the axis (161) of the second flap (160) is disposed downstream of the axis (101) of the mixing flap (100, 100', 110), in the direction of propagation of the diverted air flow.

20. Installation according to one of the preceding claims, **characterised in that** the axis of rotation (101) of the mixing flap (100, 100', 110) is spaced apart from the said wall (46) of the diversion channel (6) so as to allow part of the diverted air flow to pass, between the said axis of rotation (101) and the said wall (46).

## Patentansprüche

1. Klimagerät, insbesondere Heiz-Klimagerät, dass vor allem einen Lufteintritt (2), einen Heizkörper (4) und eine Mischklappe (100, 100', 110) umfasst, die zwischen einer ersten (I) und einer zweiten (II) Außenposition verschoben werden kann, wobei die erste Position einem direkten Durchgang der Luft des Lufteintritts (2) in Richtung eines Luftverteilerkreises entspricht, um einen direkten Luftfluss zu bilden und die erste Position, die einem umgelenkten Durchgang der Luft des Lufteintritts durch eine Öffnung entspricht, die das den Heizkörper (4) bildenden Element versorgt, bevor sie den Luftverteilerkreis durch einen Umlenkkanal (6) erreicht, der flussabwärts liegend des den Heizkörper (4) bildenden Elementes angeordnet ist, um einen umgelenkten Luftfluss zu bilden, wobei der umgelenkte Durchgang der Luft Folgendes umfasst:
- die besagte Öffnung,
- das den Heizkörper (4) bildende Element,
- einen flussaufwärts liegenden Ableitungskanal (5), der sich oberhalb des den Heizkörper (4) bildenden Elementes befindet und durch eine Wand (9) und eine Trennwand (41) begrenzt wird,
- den flussabwärts liegenden Umlenkkanal (6), der durch die besagte Trennwand (41) begrenzt wird und durch eine Wand (46), die gegenüber dem Lufteintritt (2) liegt;
Zwischenpositionen zwischen der ersten und der zweiten Position, die eine Mischung zwischen dem besagten direkten Luftfluss und dem besagten abgeleiteten Luftfluss ermöglichen, wobei die Mischklappe (100, 100', 110) einerseits einen ersten (102, 111) und einen zweiten (103, 103', 114) benachbarten Bereich aufweist, wobei der eine im Vergleich zum anderen unbeweglich ist und andererseits eine Rotationsachse (101), die von dem besagten ersten und zweiten benachbarten Bereich entfernt ist und dadurch, dass in der ersten Position (I) der erste Bereich (102, 111) die besagte Versorgungsöffnung des den Heizkörper (4) bildenden Elementes absperrt und der zweite Bereich (103, 103', 112) zumindest teilweise den besagten flussabwärts liegenden Umlenkkanal (6) absperrt und dadurch, dass in der zweiten Position (II) der erste (102, 111) und der zweite (103, 103', 114) Bereich zusammenarbeiten, um eine Öffnung für den direkten Durchgang in Richtung des Luftverteilerkreises (15, 16, 33) abzusperren, **dadurch gekennzeichnet, dass** die Rotationsachse (101) der Mischklappe in der Umgebung der Wand (46) des Umlenkkanals angeordnet ist.

2. Gerät nach Anspruch 1, **dadurch gekennzeichnet, daß** zumindest einer der ersten (102) und zweiten (103) Bereiche eben ist.

3. Gerät nach Anspruch 2, **dadurch gekennzeichnet, daß** der erste Abschnitt (102) eben ist, und daß der zweite Abschnitt (103) ein kurvenartiges Profil aufweist, welches eine Krümmung hin zu dem Umlenkkanal (6) aufweist oder dreht.

4. Gerät nach Anspruch 3, **dadurch gekennzeichnet, daß** das Profil des zweiten Bereiches (103) zumindest teilweise ein Kreisbogen ist.

5. Gerät nach einem der vorangegangenen Ansprüche, **dadurch gekennzeichnet, daß** der zweite Abschnitt (103', 114) in solch einer Weise profiliert ist, daß ein Luftdurchtritt von dem Lufteintritt hin zu dem Verteilerkanal (6) in zumindest bestimmten zwischengelagerten Positionen zwischen der ersten Position (I) und der zweiten Position (II) möglich ist.

6. Gerät nach Anspruch 5, **dadurch gekennzeichnet, daß** der zweite Abschnitt oder Bereich an seinen Enden Bereiche (108, 109) aufweist, die Dichtungsanschläge bilden, zwischen welchen ein Bereich (107) angeordnet ist, der sich in Richtung des Umlenkkanales (6) erstreckt, um den Luftdurchtritt hin zu dem Verteilerkanal zu ermöglichen.

7. Gerät nach Anspruch 5, **dadurch gekennzeichnet, daß** die Mischklappe (110) einen ersten Bereich (111) mit einem kurvenartigen Profil aufweist, dessen Krümmung hin zu dem Lufteintritt (2) gerichtet oder gedreht ist, wenn die Mischklappe (110) in ihrer zweiten Position (II) vorliegt, sowie einen zweiten Bereich (114) mit einem kurvenartigen Profil, dessen Krümmung hin zu dem Umlenkkanal (6) gerichtet oder gedreht ist, wenn die Mischklappe (110) in ihrer zweiten Position (II) vorliegt.

8. Gerät nach einem der vorangegangenen Ansprüche, **dadurch gekennzeichnet, daß** ein Verdampfer (3) vorgesehen ist, der von Luft durchquert wird, welche von dem Lufteintritt herrührt.

9. Gerät nach einem der vorangegangenen Ansprüche, **dadurch gekennzeichnet, daß** eine Einrichtung (105, 120, 130, 140, 150, 160) vorgesehen ist, um die umgelenkte Luftströmung in solch einer Weise auszurichten, daß deren Mischung mit der direkten Luftströmung in zumindest einer zwischengelagerten Position der Mischklappe (100, 100', 110) vereinfacht ist.

10. Gerät nach Anspruch 9, **dadurch gekennzeichnet, daß** die Einrichtung zum Ausrichten ein Deflektor (105) ist, welcher einstückig mit der Mischklappe (100, 100', 110) oder diesbezüglich verbunden ist und sich ausgehend von deren Rotationsachse (101) erstreckt.

11. Gerät nach Anspruch 9, **dadurch gekennzeichnet, daß** die Einrichtung zum Ausrichten eine zweite Klappe (120, 130) ist, deren Rotationsachse dieselbe ist wie jene (101) der Mischklappe (100, 100', 110).

12. Gerät nach Anspruch 9, **dadurch gekennzeichnet, daß** die Einrichtung zum Ausrichten eine zweite Klappe (140, 150, 160) ist, deren Rotationsachse versetzt vorliegt mit Bezug auf jene (101) der Mischklappe (100, 100', 110).

13. Anlage nach einem der Ansprüche 11 oder 12, **dadurch gekennzeichnet, daß** die zweite Klappe (120, 130) vom Fahnentyp ist.

14. Gerät nach Anspruch 13, **dadurch gekennzeichnet, daß** in der ersten Position (I) der zweiten Klappe (120) deren Ende, welches der Rotationsachse entgegengesetzt ist, einen Abströmrand bildet.

15. Gerät nach Anspruch 13, **dadurch gekennzeichnet, daß** in der ersten Position (I) der zweiten Klappe (130) deren Ende, welches der Rotationsachse gegenüberliegt, einen Anströmrand bildet.

16. Gerät nach Anspruch 12, **dadurch gekennzeichnet, daß** die zweite Klappe (140) vom Schmetterlingstyp ist.

17. Gerät nach Anspruch 12, **dadurch gekennzeichnet, daß** die zweite Klappe (150, 160) vom Trommel- oder Schalentyp ist.

18. Gerät nach Anspruch 17, **dadurch gekennzeichnet, daß** die Achse (151) der zweiten Klappe (150) flußaufwärtsliegend der Achse (101) der Mischklappe (100, 100', 110) in der Richtung der Ausbreitung der umgelenkten Luftströmung angeordnet ist.

19. Gerät nach Anspruch 17, **dadurch gekennzeichnet, daß** die Achse (161) der zweiten Klappe (160) flußabwärtsliegend der Achse (101) der Mischklappe (100, 100', 110) in der Richtung der Ausbreitung der umgelenkten Luftströmung angeordnet ist.

20. Gerät oder Anlage nach einem der vorangegangenen Ansprüche, **dadurch gekennzeichnet, daß** die Rotationsachse (101) der Mischklappe (100, 100', 110) von der Wand (46) des Umlenkkanales (6) in solch einer Weise beabstandet ist, daß ein Teil der umgelenkten Luftströmung zwischen der Rotationsachse (101) und der Wand (46) durchgelassen wird.
